# EUROPÄISCHE PATENTSCHRIFT

(11) **EP 1 171 539 B1**
(45) Veröffentlichungstag und Bekanntmachung des Hinweises auf die Patenterteilung: **22.12.2004**
(21) Anmeldenummer: 00918847.5
(22) Anmeldetag: 04.04.2000
(51) Int. Cl.: C09J 133/06

(54) **Verfahren zur Verklebung einer UV-durchlässigen Folie mit einem weiteren Substrat**
Process for conglutinating an UV-transmissible foil with a further substrate
Procédé pour coller une feuille UV-transparente avec un autre substrat

(30) Priorität: 14.04.1999 DE 19916663; 29.07.1999 DE 19935624
(43) Veröffentlichungstag der Anmeldung: 16.01.2002
(73) Patentinhaber: BASF AKTIENGESELLSCHAFT, 67056 Ludwigshafen (DE)
(72) Erfinder: SCHUMACHER, Karl-Heinz, D-67433 Neustadt (DE); KIELHORN-BAYER, Sabine, D-67133 Maxdorf (DE); FRICKE, Hans-Joachim, D-67246 Dirmstein (DE)
(86) Internationale Anmeldenummer: PCT/EP2000/002975
(87) Internationale Veröffentlichungsnummer: WO 2000/063314

(56) Entgegenhaltungen:
- EP-A- 0 346 734
- EP-A- 0 377 199
- WO-A-93/09152
- WO-A-94/00524
- PATENT ABSTRACTS OF JAPAN vol. 006, no. 154 (C-119), 14. August 1982 (1982-08-14) & JP 57 074310 A (TOYOBO CO LTD), 10. Mai 1982 (1982-05-10)
- PATENT ABSTRACTS OF JAPAN vol. 017, no. 339 (C-1075), 28. Juni 1993 (1993-06-28) & JP 05 039327 A (TOKYO KEIKAKU:KK), 19. Februar 1993 (1993-02-19)
- PATENT ABSTRACTS OF JAPAN vol. 017, no. 382 (C-1085), 19. Juli 1993 (1993-07-19) & JP 05 065316 A (TOKYO KEIKAKU:KK), 19. März 1993 (1993-03-19)
- HEBER H: "DEUTSCHE PATENT-SPRACHE IN DER LACKTECHNIK" FARBE + LACK,DE,CURT R.VINCENTZ VERLAG. HANNOVER, Bd. 104, Nr. 6, 1998, Seiten 58,60-63, XP002067122 ISSN: 0014-7699

## Beschreibung

Die Erfindung betrifft ein Verfahren zur großflächigen Verklebung einer UV durchlässigen Folie mit einem weiteren Substrat, dadurch gekennzeichnet, daß ein Kaschierklebstoff, welcher eine wäßrige Dispersion eines Polymeren, welches durch UV-Strahlung vernetzbar ist, enthält, auf mindestens eins der Substrate aufgebracht wird, die Substrate verklebt werden und danach die UV-Licht durchlässige Folie mit UV Licht bestrahlt wird.

Die Kaschierklebstoffe enthalten eine wäßrige Dispersion eines Polymeren, welches durch UV-Strahlung vernetzbar ist. Bei der Glanzfolienkaschierung werden zweikomponentige Polyurethan-Lösungen oder chemisch vernetzende wässrige Dispersionen als Klebstoff verwendet. Der Arbeitsprozess mit beiden Klebstoffsystemen läuft wie folgt: Zunächst wird die *Glanzfo*lie, in der Regel orientiertes Polypropylen OPP oder auch Polyacetat mit dem flüssigen Klebstoff beschichtet. Dann wird der Klebstoff getrocknet und anschließend die beschichtete Folie unter Druck und Wärme auf den Bedruckstoff, in der Regel ein bedruckter Karton kaschiert. Das so hergestellte Laminat wird in der Weiterverarbeitung häufig genutet oder geprägt. Um nut- bzw. prägefest zu sein, muß die Klebstoffschicht diesen verformungen des Laminats standhalten, in der Nut bzw. in den Prägstellen, darf sich die Glanzfolie nicht von dem Bedruckstoff lösen. Um dies zu gewährleisten, sind die Klebstoffsysteme in der Regel chemisch vernetzt. Da die hier überlicherweise angewendeten Vernetzungssysteme Zeit brauchen, um die notwendige Kohäsion in der Klebstoffschicht aufzubauen, müssen die hergestellen Kaschierungen zunächst einige Stunden gelagert werden, bevor sie genutet oder geprägt werden können. Diese Zwischenlagerungen wird zunehmend als nachteilig empfunden, weil sie eine Verzögerung der Auftragsbearbeitung bedeuten.

Chemisch vernetzende Polymerdispersionen für die Glanzfolienkaschierung sind z.B. aus EP-A-35165 oder EP-A- 644902 bekannt.

UV-vernetzbare Polymere und ihre Verwendung als Klebstoffe sind z.B. aus EP 377199 bekannt.

Aufgabe der vorliegenden Erfindung waren daher Kaschierklebstoffe, welche nach der Kaschierung eine möglichst sofortige Weiterverarbeitung der Laminate erlauben; weiterhin müssen die Kaschierklebstoffe eine gute Haftung zu den Substraten und eine möglichst hohe Kohäsion in der Klebstoffschicht aufweisen. Weiterhin sollten die Kaschierklebstoffe transparent, frei von Koagulat, alterungsbeständig, lichtbeständig und schaumarm sein.

Demgemäß wurde das eingangs definierte verfahren und ihre Verwendung insbesondere in der Glanzfolienkaschierung gefunden.

Der Kaschierklebstoff enthält als Bindemittel eine wäßrige Dispersion eines Polymeren, welches durch UV-Strahlung vernetzbar ist.

Vorzugsweise enthält der Kaschierklebstoff dazu einen Fotoinitiator. Durch Bestrahlung mit energiereichen Licht, insbesondere UV-Licht bewirkt der Fotoinitiator eine Vernetzung des Polymeren, vorzugsweise durch eine chemische Pfopfreaktion des Fotoinitiators mit einer räumlich benachbarten Polymerkette. Insbesondere kann die Vernetzung durch Einschub einer Carbonylgruppe des Fotoinitiators in eine benachbarte C-H-Bindung unter Ausbildung einer -C-C-O-H Gruppierung erfolgen.

Der Kaschierklebstoff enthält vorzugsweise 0,0001 bis 1 mol, besonders bevorzugt 0,0002 bis 0,1, ganz besonders bevorzugt 0,0003 bis 0,01 mol des Fotoinitiators, bzw. der als Fotoinitiator wirksamen Molekülgruppe, pro 100 g Polymer.

Beim Fotoinitiator handelt es sich z.B. um Acetophenon, Benzoinether, Benzyldialkylketole oder deren Derivate.

Bevorzugt ist der Fotoinitiator an das Polymer gebunden.

Besonders bevorzugt handelt es sich um einen Fotoinitiator, welcher durch radikalische Copolymerisation in die Polymerkette eingebaut ist. Vorzugsweise enthält der Fotoinitiator dazu eine Acryl- oder (Meth)acrylgruppe.

Geeignete copolymerisierbare Fotoinitiatoren sind Acetophenenoder Benzophenonderivate, welche mindestens eine, vorzugsweise eine ethylenisch ungesättigte Gruppe enthalten. Bei der ethylenisch ungesättigten Gruppe handelt es sich vorzugsweise um eine Acryl- oder Methacrylgruppe.

Die ethylenisch ungesättigte Gruppe kann direkt an den Phenylring des Acetophenon- oder Benzophenonderivats gebunden sein. Im allgemeinen befindet sich zwischen Phenylring und ethylenisch ungesättigter Gruppe eine Spacergruppe (-Abstandshalter).

Die Spacergruppe kann z.B. bis 100 C-Atome enthalten.

Geeignete Acetophenon- ode Benzophenonderivate sind z.B. in EP-A-346 734, EP-A-377199 (1. Anspruch), DE-A-4 037 079 (1. Anspruch) und DE-A- 3 844 444 (1. Anspruch) beschrieben. Bevorzugte Acetophenon- und Benzophenonderivate sind solche der Formel 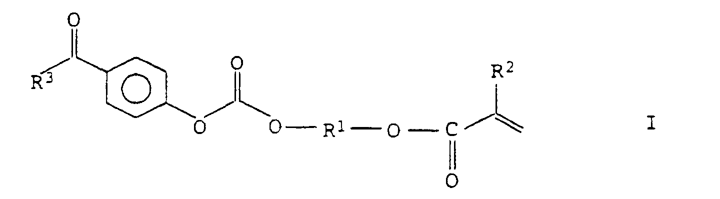 worin R¹ für einen organischen Rest mit bis zu 30 C-Atomen, R² für ein H-Atom oder eine Methylgruppe und R³ für eine gegebenenfalls sbstituierte Phenylgruppe oder eine C₁-C₄-Alkylgruppe steht.
R¹ steht besonders bevorzugt für eine Alkylengruppe, insbesondere für eine C₂-C₈-Alkylengruppe.
R³ steht besonders bevorzugt für eine Methylgruppe oder eine Phenylgruppe.

Das Polymer ist vorzugsweise aufgebaut aus radikalisch polymerisierbaren Verbindungen (Monomere).

Vorzugsweise besteht das Polymer zu mindestens 40 Gew.-%, besonders bevorzugt zu mindestens 60 Gew.-%, ganz besonders bevorzugt zu mindestens 80 Gew.-% aus sogenannten Hauptmonomeren.

Die Hauptmonomeren sind ausgewählt aus
C₁-C₂₀-Alkyl(meth)acrylaten, Vinylestern von bis zu 20 C-Atome enthaltenden Carbonsäuren, Vinylaromaten mit bis zu 20 C-Atome, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und l oder 2 Doppelbindungen oder Mischungen dieser Monomeren.

Zu nennen sind z. B. (Meth)acrylsäurealkylester mit einem
C₁-C₁₀-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z. B. Vinyllaurat, -stearat, Vinylpropionat, Versaticsäurevinylester und vinylacetat.

Als vinylaromatische Verbindungen kommen Vinyltoluol a- und p-Methylstyrol, a-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z. B. Vinylmethylether oder Vinylisobutylether. Bevorzugt wird Vinylether von 1 bis 4 C-Atome enthaltenden Alkoholen.

Als Kohlenwasserstoffe mit 2 bis 8 C-Atomen und zwei olefinischen Doppelbindungen seien Butadien, Isopren und Chloropren genannt.

Als Hauptmonomere bevorzugt sind die C₁- bis C₁₀-Alkylacrylate und -methacrylate, insbesondere C₁- bis C₈-Alkylacrylate und -methacrylate, wobei die Acrylate jeweils besonders bevorzugt sind.

Ganz besonders bevorzugt sind Methylacrylat, Ethylacrylat, n-Butylacrylat, n-Hexylacrylat, Octylacrylat und 2-Etyhlhexylacrylat sowie Mischungen dieser Monomere.

Neben den Hauptmonomeren kann das Polymer weitere Monomere enthalten, z. B. Monomere mit Carbonsäure, Sulfonsäure oder Phosphonsäuregruppen. Bevorzugt sind Carbonsäuregruppen. Genannt seien z. B. Acrylsäure, Methacrylsäure, Itaconsäure, Maleinsäure oder Fummarsäure.

Weitere Monomere sind z. B. auch Hydroxylgruppen enthaltende Monomere, insbesondere C₁-C₁₀-Hydroxyalkyl(meth)acrylate, (Meth)acrylamid.

Als weitere Monomere seien darüberhinaus Phenyloxyethylglykolmono- (meth-)acrylat, Glydidylacrylat, Glycidylmethacrylat, Amino- (meth-)acrylate wie 2-Aminoethyl- (meth-)acrylat genannt.

Monomere, die außer der Doppelbindung noch weitere funktionelle Gruppen tragen, z. B. Isocyanat-, Amino-, Hydroxy-, Amid- oder Glycidyl-, können z. B. die Haftung auf Substraten verbessern.

Die Glasübergangstemperatur des Polymeren liegt bevorzugt unter 60°C, insbesondere beträgt sie -50 bis +60°C, besonders bevorzugt -30 bis +40°C und ganz besonders bevorzugt -30 bis +20°C.

Die Glasübergangstemperatur des Polymerisats läßt sich nach üblichen Methoden wie Differentialthermoanalyse oder Differential Scanning Calorimetrie (s. z. B. ASTM 3418/82, sog. "midpoint temperature") bestimmen.

Die Herstellung des Polymeren erfolgt vorzugsweise durch Emulsionspolymerisation, es handelt sich daher um ein Emulsionspolymerisat.

Die Herstellung kann jedoch z. B. auch durch Lösungspolymerisation und anschließende Dispergierung in Wasser erfolgen.

Bei der Emulsionspolymerisation werden ionische und/oder nichtionische Emulgatoren und/oder Schutzkolloide bzw. Stabilisatoren als grenzflächenaktive Verbindungen verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren Molekulargewicht im Unterschied zu den Schutzkolloiden üblicherweise unter 2000 g/mol liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Vorzugsweise werden anionische und nichtionische Emulgatoren als grenzflächenaktive Substanzen verwendet. Gebräuchliche begleitende Emulgatoren sind z. B. ethoxylierte Fettalkohole (EO-Grad: 3 bis 50, Alkylrest: C₈bis C₃₆), ethoxylierte Mono-, Di- und Tri-Alkylphenole (EO-Grad: 3 bis 50, Alkylrest: C₄- bis C₉), Alkalimetallsalze von Dialkylestern der Sulfobernsteinsäure sowie Alkali- und Ammoniumsälze von Alkylsulfaten (Alkylrest: C₈- bis C₁₂), von ethoxylierten Alkanolen (EO-Grad: 4 bis 30, Alkylrest: C₁₂- bis C₁₈), von ethoxylierten Alkylphenolen (EO-Grad: 3 bis 50, Alkylrest: C₄- bis C₉), von Alkylsulfonsäuren (Alkylrest: C₁₂- bis C₁₈) und von Alkylarylsulfonsäuren (Alkylrest: C₉- bis C₁₈).

Weitere geeignete Emulgatoren sind Verbindungen der allgemeinen Formel II 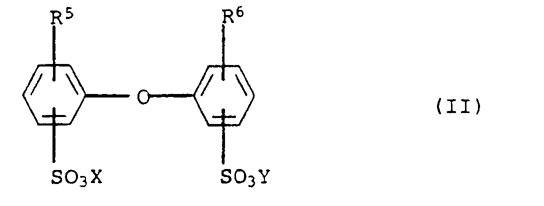 worin R⁵ und R⁶ Wasserstoff oder C₄- bis C₁₄-Alkyl bedeuten und nicht gleichzeitig Wasserstoff sind, und C und Y Alkalimetallionen und/oder Ammoniumionen sein können. Vorzugsweise bedeuten R⁵, R⁶ lineare oder verzweigte Alkylreste mit 6 bis 18 C-Atomen oder Wasserstoff und insbesondere mit 6, 12 und 16 C-Atomen, wobei R⁵ und R⁶ nicht beide gleichzeitig Wasserstoff sind. X und Y sind bevorzugt Natrium, Kalium oder Ammoniumionen, wobei Natrium besonders bevorzugt ist. Besonders vorteilhaft sind verbindungen II in denen X und Y Natrium, R⁵ ein verzweigter Alkylrest mit 12 C-Atomen und R⁶ Wasserstoff oder R⁵ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company).

Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208.

Handelsnamen von Emulgatoren sind z. B. Dowfax®2 A1, Emulan® NP 50, Dextrol® OC 50, Emulgator 825, Emulgator 825 S, Emulan® OG, Texapon® NSO, Nekanil® 904 S, Lumiten® I-RA, Lumiten E 3065, Disponil FES 77, Lutensol AT 18, Steinapol VSL, Emulphor NPS 25.

Die grenzflächenaktive Substanz wird üblicherweise in Mengen von 0,1 bis 10 Gew.-%, bezogen auf die zu polymerisierenden Monomeren verwendet.

Wasserlösliche Initiatoren für die Emulsionspolymerisation sind z. B. Ammonium- und Alkalimetallsalze der Peroxidischwefelsäure, z. B. Natriumperoxodisulfat, Wasserstoffperoxid oder organische Peroxide, z. B. tert-Butylhydroperoxid.

Geeignet sich insbesondere sogenannte Reduktions-Oxidations(Red-Ox)-Initiator Systeme.

Die Red-Ox-Initiator-Systeme bestehen aus mindestens einem meist anorganischen Reduktionsmittel und einem anorganischen oder organischen Oxidationsmittel.

Bei der Oxidationskomponente handelt es sich z. B. um die bereits vorstehend genannten Initiatoren für die Emulsionspolymerisation.

Bei der Reduktionskomponenten handelt es sich z. B. um Alkalimetallsalze der schwefligen Säure, wie z. B. Natriumsulfit, Natriumhydrogensulfit, Alkalisalze der Dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden.

Übliche Red-Ox-Initiator-Systeme sind z. B. Ascorbinsäure/Eisen(II)sulfat/Natriumperoxidisulfat, tert-Butylhydroperoxid/Natriumdisulfit, tert-Butylhydroperoxid/Na-Hydroxymethansulfinsäure. Die einzelnen Komponenten, z. B. die Reduktionskomponente, können auch Mischungen sein z.B. eine Mischung aus dem Natriumsalz der Hydroxymethansulfinsäure und Natriumdisulfit.

Die genannten Verbindungen werden meist in Form wäßriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung.

Die Menge der Initiatoren beträgt im allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden.

Bei der Polymerisation können Regler eingesetzt werden, z. B. in Mengen von 0 bis 0,8 Gew.-Teile, bezogen auf 100 Gew.-Teile der zu polymerisierenden Monomeren, durch die die Molmasse verringert wird. Geeignet sind z. B. Verbindungen mit einer Thiolgruppe wie tert.-Butylmercaptan, Thioglycolsäureethylacrylester, Mercaptoethynol, Mercaptopropyltrimethoxysilan oder tert.-Dodecylmercaptan. Der Anteil dieser Regler kann im Falle der Verwendung als Klebstoff für die Verbundfolienkaschierung insbesondere 0,05 bis 0,8 Gew.-Teile, bevorzugt 0,1 bis 0,5 Gew.-Teile bezogen auf 100 Gew.-Teile der zu polymerisierenden Monomeren betragen. Im Falle der Verwendung als Klebstoff für die Glanzfolienkaschierung ist die Mitverwendung eines Reglers weniger bevorzugt. Die Regler enthalten keine polymerisierbare, ethylenisch ungesättigte Gruppe. Die Regler bewirken einen Abbruch der Polymerisationskette und werden daher endständig an die Polymerketten gebunden.

Die Emulsionspolymerisation erfolgt in der Regel bei 30 bis 130, vorzugsweise 50 bis 90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozeß als auch in Form eines Zulaufverfahrens, einschlie-Bich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. Bei der Polymerisation kann auch z. B. zur besseren Einstellung der Teilchengröße eine Polymersaat vorgelegt werden.

Die Art und Weise, in der der Initiator im Verlauf der radikalischen wäßrigen Emulsionspolymerisation dem Polymerisationsgefäß zugegeben wird, ist dem Durchschnittsfachmann bekannt. Es kann sowohl vollständig in das Polymeristionsgefäß vorgelegt, als auch nach Maßgabe seines Verbrauchers im Verlauf der radikalischen wäßrigen Emulsionspolymerisation kontinuierlich oder stufenweise eingesetzt werden. Im einzelnen hängt dies von der chemischen Natur des Initiatorsystems als auch von der Polymersiationstemperatur ab. Vorzugsweise wird ein Teil vorgelegt und der Rest nach Maßgabe des Verbrauchs der Polymerisationszone zugeführt.

Zur Entfernung der Restmonomeren wird üblicherweise auch nach dem Ende der eigentlichen Emulsionspolymerisation, d. h. nach einem Umsatz der Monomeren von mindestens 95 %, Initiator zugesetzt.

Die einzelnen Komponenten können dem Reaktor beim Zulaufverfahren von oben, in der Seite oder von unten durch den Reaktorboden zugegeben werden.

Bei der Emulsionspolymerisation werden wäßrige Dispersionen des Polymeren in der Regel mit Feststoffgehalten von 15 bis 75 Gew.-%, bevorzugt von 40 bis 75 Gew.-% erhalten.

Für eine hohe Raum/Zeitausbeute des Reaktors sind Dispersionen mit einem möglichst hohen Feststoffgehalt bevorzugt. Um Feststoffgehalte > 60 Gew.-% erreichen zu können, sollte man eine bioder polymodale Teilchengröße einstellen, da sonst die Viskosität zu hoch wird, und die Dispersion nicht mehr handhabbar ist. Die Erzeugung einer neuen Teilchengeneration kann beispielsweise durch Zusatz von Saat (EP 81083), durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/neuer Teilchengeneration/en kann zu einem beliebigen Zeitpunkt erfolgen. Er richtet sich nach den für eine niedrige Viskosität angestrebten Teilchengrößenverteilung.

Das Polymerisat wird in Form seiner wäßrigen Dispersion verwendet.

Die Dispersion wird als Kaschierklebstoff zum Verkleben von großflächigen Substraten, d. h. zur Herstellung von Laminaten, verwendet.

Die Kaschierklebstoffe können ausschließlich aus der wäßrigen Dispersion des Polymeren und dem Fotoinitiator bestehen, sie können weitere Zusatzstoffe, z. B. Netzmittel, Verdicker, Schutzkolloide, Lichtschutz-Stabilisatoren, Biozide, Tackifier, Weichmacher enthalten.

Der Kaschierklebstoff benötigt nicht den Zusatz von Vernetzern, sonstigen Reaktivkomponenten oder Mischungskomponenten um die gewünschten Eigenschaften, insbesondere die gewünschte Kohäsion zu erreichen.

Als zu verklebende Substrate eignen sich z. B. Polymerfolien, insbesondere aus Polyethylen, orientiertem Polypropylen, Polyamid, Polyethylenterephthalat, Celluloseacetat, Zellglas, mit Metall (z. B. Aluminium beschichtete (bedampfte) Polymerfolie (kurz: metallisierte Folien) oder auch Papier, Karton oder Metallfolien, insbesondere aus Aluminium. Die genannten Folien können auch z. B. mit Druckfarben bedruckt sein.

Der Kaschierklebstoff wird auf zumindest ein großflächiges Substrat vorzugsweise mit einer Schichtdicke von 0,1 bis 20, besonders bevorzugt 2 bis 15 g/m² z. B. durch Rakeln, Streichen etc. aufgetragen.

Mindestens eines der beiden zu verklebenden Substrate sollte transparent für energiereiches Licht, insbesondere UV-Licht sein.

Vorzugsweise nach Trocknung bzw. Ablüftung des Dispersionswasser (z.B. nach 1 bis 60 Sekunden) wird das beschichtete Substrat dann mit einem zweiten Substrat kaschiert, wobei die Temperatur z. B. 20 bis 200, vorzugsweise 20 bis 70°C und der Druck z. B. 1 bis 30, vorzugsweise 3 bis 20 N/m² betragen kann.

Vorzugsweise handelt es sich bei dem Klebstoff beschichteten Substrat um eine transparente Polymerfolie.

Das Polymerisat bzw. die Dispersion wird bevorzugt als Klebstoff für die Glanzfolienkaschierung verwendet.

Bei der Glanzfolienkaschierung werden Papier oder Karton mit transparenten Polymerfolien verklebt. Die Papiere oder Kartone können bedruckt sein.

Direkt nach der Verklebung wird die Kaschierklebstoffschicht durch die transparente Folie mit energiereichem Licht, welches die Vernetzungsreaktionen der Fotoinitiatorgruppe auslöst, bestrahlt.

Es sich dabei um UV-Licht. Zur UV-Bestrahlung können handelsübliche Quecksilbermitteldrucklampen oder Laser verwendet werden, die im UV-Bereich emittieren.

Die Strahlungsenergie kann z.B. 200 mJ/cm² bis 1500 mJ/cm² bestrahlte Fläche betragen.

Unmittelbar nach der Bestrahlung kann eine Weiterverarbeitung, z.B. Nutung oder Prägung der kaschierten Substrate, z.B. der mit Folie kaschierten Kartone erfolgen. Eine Wartezeit ist nicht mehr erforderlich.

Mit dem Kaschierklebstoff werden Substratverbunde mit hoher Haftfestigkeit, auch im Bereich von Nuten oder Prägungen und hoher Transparenz und hohem Glanz erhalten.

### Beispiele

### A) Herstellung von Polymerdispersionen

Die Herstellung erfolgt nach folgender allgemeiner Vorschrift:

Die Vorlage (250 g Wasser und 3 g einer Styrolsaat (33 %ig) mit einem mittleren Teilchendurchmesser von 30 nm) wurde auf 85°C Innentemperatur aufgeheizt und 5 % zulauf 2 vorgelegt. Nach 10 min. Wartezeit wurden Zulauf 1, welcher die Monomeren enthält, und Zulauf 2 gestartet.

Zulauf 2 bestand aus 3,0 g Natriumperoxodisulfat gelöst in 39,9 g Wasser. Die Zusammensetzung von Zulauf 1 ist in Tabellen 1 angegeben.

Zulauf 1 und 2 wurden in 3 h zudosiert und 0,5 h nach polymerisiert.

**Tabelle 1:**

| Zusammensetzung der Polymeren in Gewichtsteilen | | | | | | |
|---|---|---|---|---|---|---|
| Nr. | BA | EHA | MA | MMA | AS | FI |
| 1 | 78 | | 20 | | 2 | 0,5 |
| 2 | 78 | | | 20 | 2 | 0,2 |
| 3 | 78 | | 20 | | 2 | 0,1 |
| 4* | 78 | | 20 | | 2 | -- |
| 5 | 50,5 | 29 | 18 | | 2,5 | 0,5 |
| 6 | 50,5 | 29 | 18 | | 2,5 | 0,2 |
| 7 | 50,5 | 29 | 18 | | 2,5 | 0,1 |
| 8 | 78 | | | 20 | 2 | 0,1 |
| 9* | 78 | | | 20 | 2 | -- |

| | | | | | | |
|---|---|---|---|---|---|---|
| * zum Vergleich | | | | | | |

Die Menge Initiator (Natriumperoxodisulfat betrug jeweils 0,3 Gew.-Teile, als Emulgator wurden 0,4 Gew.-Teile Dowfax 2A1 und 0,6 Gew.-Teile Lumiten IRA, bezogen auf die in der Tabelle angegebenen Gew.-Teile Monomere verwendet.

Abkürzungen und Erläuterungen:
Dowfax 2A1: 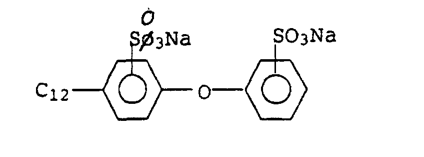
Lumiten IRA: 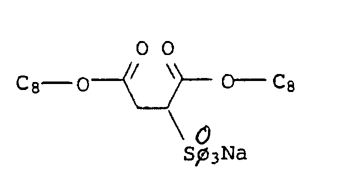
EHA: 2-Ethylhexylacrylat
BA; n-Butylacrylat
MA: Methylacrylat
MMA: Methylmethacrylat
AS: Acrylsäure
FI: copolymerisierbares Benzophenon mit Acrylgruppe

### B) Glanzfolienkaschierung

Glanzfolienkaschierung mit Karton (Cromoduplex-Karton) und Polypropylen (Corona-vorbehandelt) und mit Karton und Celluloseacetatfolie

Die vorbehandelte Seite der Polypropylenfolie (PP) wurde mit Klebstoff beschichtet. Nach dem Trocknen mit Kaltluft wurde der Karton aufgelegt und mit einer Laborkaschierrolle angerollt. Die zugeschnittenen Kaschierungen wurden in der Rollenpresse gepreßt.

Danach wurde direkt mit UV-Licht bestrahlt. die kaschierten Proben wurden eine Stunde nach Bestrahlung (mit 500 mJ bzw. 1000 mJ/cm²) genutet und die Nut visuell beurteilt:

| | | |
|---|---|---|
| Benotung: | 1 | Nut ist vollständig in Ordnung |
| | 2 | Nut ist an einzelnen Stellen leicht geöffnet |
| | 3 | Nut ist an einzelnen Stellen deutlich geöffnet |
| | 4 | Nut ist vollständig offen |

**Tabelle 2:**

| Ergebnisse | | | |
|---|---|---|---|
| | Ohne UV-Bestrahlung | 500 mJ/cm² | 1000 mJ/cm² |
| 1 | 4 | 2-3 | 1 |
| 2 | 4 | 1-2 | 1 |
| 3 | 4 | 2-3 | 1 |
| 4* | 4 | 4 | 4 |
| 5 | 4 | 3 | 1-2 |
| 6 | 4 | 2 | 1 |
| 7 | 3-4 | 2-3 | 1 |
| 8 | 4 | 3 | 2 |
| 9* | 4 | 4 | 4 |
| 10** | 4 | 3 | 2 |
| Acronal A 310 S* | 3-4 | 3-4 | 3-4 |

| | | | |
|---|---|---|---|
| * zum Vergleich; bei Acronal® A 310 S handelt es sich um einen handelsüblichen Kaschierklebstoff | | | |
| ** Versuch 10 entspricht 4*, jedoch wurden 0,3 Gew.-Teile, bezogen auf 100 Gew.-Teile Polymer, Benzophenon zugesetzt. | | | |

## Patentansprüche

1. Verfahren zur großflächigen Verklebung einer UV durchlässigen Folie mit einem weiteren Substrat, **dadurch gekennzeichnet, daß** ein Kaschierklebstoff, welcher eine wäßrige Dispersion eines Polymeren, welches durch UV-Strahlung vernetzbar ist, enthält, auf mindestens eins der Substrate aufgebracht wird, die Substrate verklebt werden und danach die UV-Licht durchlässige Folie mit UV Licht bestrahlt wird.

2. Verfahren gemäß Anspruch 1, wobei der Kaschierklebstoff einen Gehalt von 0,0001 bis 1 mol pro 100 g Polymer eines Fotoinitiators, der bei Bestrahlung mit energiereichem Licht eine Vernetzungsreaktion bewirkt, aufweist.

3. Verfahren gemäß Anspruch 1 oder 2, wobei der Fotoinitiator an das Polymer gebunden ist.

4. verfahren gemäß einem der Ansprüche 1 bis 3, wobei es sich bei dem Fotoinitiator um ein Benzophenon oder Benzophenonderivat handelt.

5. verfahren gemäß einem der Ansprüche 1 bis 4, wobei das Polymer eine Glasübergangstemperatur von -50 bis +40°C hat.

6. verfahren gemäß einem der Ansprüche 1 bis 5, **dadurch gekennzeichnet, daß** es sich bei dem weiteren Substrat um Papier oder Karton handelt.

7. Substratverbunde, erhältlich durch ein verfahren gemäß einem der Ansprüche 1 bis 6.

## Claims

1. A process for large-surface-area adhesive bonding of a UV-translucent film to another substrate, which comprises applying, to at least one of the substrates, a laminating adhesive which comprises an aqueous dispersion of a polymer which can be crosslinked by UV radiation, and adhesive bonding of the substrates, followed by the use of UV light to irradiate the film translucent to UV light.

2. A process as claimed in claim 1, where the laminating adhesive has a content of from 0.0001 to 1 mol per 100 g of polymer of a photoinitiator which, on irradiation with high-energy light, brings about a crosslinking reaction.

3. A process as claimed in claim 1 or 2, where the photoinitiator has been bonded to the polymer.

4. A process as claimed in any one of claims 1 to 3, where the photoinitiator comprises a benzophenone or benzophenone derivative.

5. A process as claimed in any one of claims 1 to 4, where the polymer has a glass transition temperature of from -50 to +40°C.

6. A process as claimed in any one of claims 1 to 5, wherein the other substrate is paper or card.

7. A bonded substrate obtainable by a process as claimed in any one of claims 1 to 6.

## Revendications

1. Procédé de collage de grandes surfaces, d'une feuille transparente aux U.V. avec un autre substrat, **caractérisé en ce que** l'on applique une colle de couchage, qui contient une dispersion aqueuse d'un polymère qui est réticulable par les rayons U.V., sur au moins un des substrats, les substrats sont collés et ensuite, la feuille transparente aux U.V. est irradiée avec de la lumière U.V.

2. Procédé selon la revendication 1, où la colle de couchage présente une teneur allant de 0,0001 à 1 mole par 100 g de polymère, d'un photoinitiateur, qui effectue une réaction de réticulation lors de l'irradiation avec une lumière énergétique.

3. Procédé selon la revendication 1 ou 2, où le photoinitiateur est lié au polymère.

4. Procédé selon l'une des revendications 1 à 3, où le photoinitiateur consiste en une benzophénone ou un dérivé de benzophénone.

5. Procédé selon l'une des revendications 1 à 4, où le polymère a une température de transition vitreuse allant de -50 à +40°C.

6. Procédé selon l'une des revendications 1 à 5, **caractérisé en ce que** l'autre substrat est du papier ou du carton.

7. Substrat mixte obtenu par un procédé selon l'une des revendications 1 à 6.
